# EUROPEAN PATENT SPECIFICATION

(11) **EP 3 876 626 B1**
(45) Date of publication and mention of the grant of the patent: **30.09.2026**
(21) Application number: 18938920.8
(22) Date of filing: 01.11.2018
(51) Int. Cl.: H04L 5/00, H04W 72/04, H04W 16/28, H04B 7/06, H04W 76/19

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 08.09.2021
(73) Proprietor: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); HOU, Xiaolin, Beijing 100190 (CN)
(74) Representative: Hoffmann Eitle
(86) International application number: PCT/JP2018/040751
(87) International publication number: WO 2020/090092

(56) References cited:
- EP-A1- 3 855 691
- QUALCOMM INCORPORATED: "Beam management for NR", vol. RAN WG1, no. Chengdu, China; 20181008 - 20181012, 30 September 2018 (2018-09-30), XP051519027, Retrieved from the Internet <URL:http://www.3gpp.org/ftp/tsg%5Fran/WG1%5FRL1/TSGR1%5F94b/Docs/R1%2D1811633%2Ezip> [retrieved on 20180930]
- MEDIATEK INC: "Summary on Beam Failure Recovery", vol. RAN WG1, no. Chengdu, China; 20181015 - 20181019, 9 October 2018 (2018-10-09), XP051519191, Retrieved from the Internet <URL:http://www.3gpp.org/ftp/tsg%5Fran/WG1%5FRL1/TSGR1%5F94b/Docs/R1%2D1811867%2Ezip> [retrieved on 20181009]
- "3rd Generation Partnership Project; Technical Specification Group Radio Access Network; NR; Physical layer procedures for control (Release 15)", 9 April 2018 (2018-04-09), XP051435591, Retrieved from the Internet <URL:http://www.3gpp.org/ftp/tsg%5Fran/WG1%5FRL1/Clean/> [retrieved on 20180409]
- "Beam management for NR", 3GPP TSG-RAN WG1 #94BIS RL-1811633, 30 September 2018 (2018-09-30), XP051519027
- ANONYMOUS: "3rd Generation Partnership Project; Technical Specification Group Radio Access Network; NR; Physical layer procedures for control (Release 15)", 3GPP STANDARD; TECHNICAL SPECIFICATION; 3GPP TS 38.213,, no. V15.3.0, 1 October 2018 (2018-10-01), XP051487512

## Description

### Technical Field

The present disclosure relates to user terminal and a radio communication method in a next-generation mobile communication system.

### Background Art

In a universal mobile telecommunications system (UMTS) network, long term evolution (LTE) has been specified for the purpose of, for example, a further high-speed data rate and a low delay (Non Patent Literature 1). LTE-Advanced (3GPP Rel.10-14) has been specified for the purpose of larger capacity and sophistication of LTE (3GPP (third generation partnership project) ReI. (Release)8, 9).

Successor systems to LTE (e.g., also referred to as 5th generation mobile communication system (5G), 5G+ (plus), new radio (NR), and 3GPP Rel. 15 or later) are also studied.

In existing LTE systems (LTE Rel. 8 to 14), radio link quality is monitored (radio link monitoring (RLM)). When a radio link failure (RLF) is detected by RLM, reestablishment of radio resource control (RRC) connection is requested of user equipment (UE).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010
Non Patent Literature 2: QUALCOMM INCORPORATED: "Beam management for NR", 3GPP DRAFT; R1 -1811633 BEAM MANAGEMENT FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chengdu, China; 20181008 - 20181012 30 September 2018
Non Patent Literature 3: MEDIATEK INC: "Summary on Beam Failure Recovery", 3GPP DRAFT; R1-1811867_SUMMARY_BFR_CR_V06, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chengdu, China; 20181015 - 20181019 9 October 2018

### Summary of Invention

### Technical Problem

In future radio communication systems (e.g., NR), it is studied to perform a procedure to detect a beam failure and switch to another beam (which may also be referred to as "beam failure recovery (BFR) procedure," "BFR" and so on).

For BFR, UE detects a beam failure by using set reference signal resources. In contrast, in the current NR, when the resources are not set, it is studied that UE uses up to two reference signal indices corresponding to a transmission configuration indication (TCI) state (TCI-state) of a control resource set (CORESET) as a set of indices corresponding to the resources.

When the above-described resources are not set for UE and more than two CORESETs are set, UE needs to determine up to two indices to be included in the above-described set from more than two indices corresponding to these CORESETs. Non Patent Literature 2 relates to determining the BFD set and bases its decision on CORESETs with lowest monitoring periodicity. Non Patent Literature 3 relates to using CORESET #0 for BFD, taking into account that according to current RRC signalling, a TCI state cannot be configured for CORESET #0.

It has, however, not sufficiently been studied how an index to be included in the above-described set is selected in such a case. If these points are not clearly specified, beam failure cannot be properly detected, and communication throughput may be deteriorated.

Therefore, it is one object of the present disclosure to provide user terminal and a radio communication method capable of properly detecting a beam failure.

### Solution to Problem

The above technical problem is solved by the subject-matter of the independent claims. The dependent claims describe further preferred embodiments. The description discusses aspects of the present disclosure and provides technological information for carrying out the invention. User terminal according to one aspect of the present disclosure includes: a receiving section that receives a reference signal (RS) for beam failure detection (BFD); and a control section that, when a set of RS indices corresponding to a resource for the BFD is not set by higher layer signaling, selects a control resource set (CORESET) of up to a given number for determining an RS index to be included in the set in consideration of whether a transmission configuration indication (TCI) state is set in the CORESET.

### Advantageous Effects of Invention

According to one aspect of the present disclosure, a beam failure can be appropriately detected.

### Brief Description of Drawings

Fig. 1 illustrates one example of a beam recovery procedure in Rel-15 NR.
Fig. 2 illustrates one example of a schematic configuration of a radio communication system according to one embodiment.
Fig. 3 illustrates one example of the configuration of a base station according to one embodiment.
Fig. 4 illustrates one example of the configuration of user terminal according to one embodiment.
Fig. 5 illustrates one example of the hardware configuration of the base station and the user terminal according to one embodiment.

### Description of Embodiments

### (QCL/TCI)

In NR, it has been studied to control reception processing (e.g., at least one of reception, demapping, demodulation, and decoding) of at least one of a signal and a channel (expressed as a signal/channel) based on a transmission configuration indication state (TCI-state).

Here, the TCI-state is information regarding quasi-co-location (QCL) of the signal/channel, and may also be referred to as, for example, a spatial Rx parameter and spatial relation info. The TCI-state may be set in UE for each channel or each signal.

QCL is an index indicating a statistical property of a signal/channel. For example, it may mean that, if one signal/channel has a QCL relation with another signal/channel, it can be assumed that these different multiple signals/channels are the same in at least one of Doppler shift, Doppler spread, average delay, delay spread, and a spatial parameter (e.g., a spatial Rx parameter) (are QCL in at least one of these elements).

Note that the spatial Rx parameter may correspond to a reception beam of UE (e.g., reception analog beam), and the beam may be identified based on spatial QCL. QCL (or at least one element of QCL) in the present disclosure may be replaced with spatial QCL (sQCL).

A plurality of types of QCL (QCL types) may be specified. For example, four QCL types A to D with different parameters (or parameter sets) that can be assumed to be identical may be provided. These parameters are as follows:
- QCL type A: Doppler shift, Doppler spread, average delay, and delay spread;
- QCL Type B: Doppler shift and Doppler spread;
- QCL type C: Doppler shift and average delay; and
- QCL type D: spatial Rx parameter.

It may be referred to as QCL assumption for UE to assume that a given CORESET, channel, or reference signal has a specific QCL (e.g., QCL type D) relation with another CORESET, channel, or reference signal.

UE may determine at least one of a transmission beam (Tx beam) and a reception beam (Rx beam) of a signal/channel based on a TCI-state of the signal/channel or the QCL assumption.

The TCI-state may be, for example, information regarding QCL of a target channel (or a reference signal (RS) for the channel) and another signal (e.g., another downlink reference signal (DL-RS). The TCI-state may be set (indicated) by higher layer signaling, physical layer signaling, or a combination thereof.

In the present disclosure, the higher layer signaling may be, for example, any of radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), and other system information (OSI).

The physical layer signaling may be, for example, downlink control information (DCI).

A channel for which a TCI-state is set (specified) may be, for example, at least one of a physical downlink shared channel (PDSCH), a physical downlink control channel (PDCCH), a physical uplink shared channel (PUSCH), and a physical uplink control channel (PUCCH).

RS having a QCL relation with the channel may be, for example, at least one of a synchronization signal block (SSB), a channel state information reference signal (CSI-RS), and a sounding reference signal (SRS).

SSB is a signal block including at least one of a primary synchronization signal (PSS), a secondary synchronization signal (SSS), and a physical broadcast channel (PBCH). SSB may be referred to as an SS/PBCH block.

An information element in a TCI-state set by higher layer signaling ("TCI-state IE" of RRC) may include one or a plurality of pieces of QCL information ("QCL-Info"). The QCL information may include at least one piece of information regarding DL-RS having a QCL relation (DL-RS related information) and information indicating a QCL type (QCL type information). The DL-RS related information may include information such as an index of a DL-RS (e.g., SSB index or non-zero power CSI-RS resource ID), an index of a cell where an RS is positioned, and an index of a bandwidth part (BWP) where the RS is positioned.

### (CORESET#0)

In initial access in NR, SSB is detected, broadcast information transmitted by PBCH is acquired, and connection is established by random access.

UE may detect SSB, and determine a control resource set (CORESET) for system information (e.g., system information block 1 (SIB1) and remaining minimum system information (RMSI)) based on information (e.g., MIB) transmitted by PBCH.

CORESET corresponds to an allocation candidate region of PDCCH. CORESET for SIB1 (or RMSI) may be referred to as CORESET for PDCCH (DCI) used to schedule PDSCH that transmits SIB1.

CORESET for SIB1 is also referred to as, for example, CORESET#0 (controlResourceSetZero), CORESET of CORESET ID (corresponding to RRC parameter "ControlResourceSetId") = 0, CORESET set via PBCH (MIB) or serving cell common settings (RRC information element "ServingCellConfigCommon"), common CORESET, common CORESET#0, cell specific CORESET, and CORESET corresponding to PDCCH common search space of type 0.

CORESET#0 may be associated with one or more search space sets. The search space set may include at least one of a common search space set and a UE specific search space set. In the present disclosure, the search space set and the search space may be replaced with each other.

Search space associated with CORESET#0 may include at least one of, for example, search space#0 (searchSpaceZero), search space for SIB1 (PDCCH common search space of type 0, searchSpaceSIB), search space for OSI (PDCCH common search space of type 0A, searchSpaceOtherSystemInformation), search space for paging (PDCCH common search space of type 2, pagingSearchSpace), and search space for random access (PDCCH common search space of type 1, ra-SearchSpace).

UE may determine CORESET#0 based on an index of a given bit number (e.g., eight bits) in MIB (also referred to as pdcch-ConfigSIB1 and RMSI-PDCCH-Config) or a parameter for CORESET#0 in SIB1 (controlResourceSetZero).

For example, UE may determine at least one of frequency resources, time resources, minimum channel bandwidth, and subcarrier spacing (SCS) of CORESET#0 based on the index or parameter.

The bandwidth of CORESET#0 may correspond to the bandwidth of BWP for initial access (also referred to as initial BWP).

UE may set an available TCI-state for CORESET other than CORESET#0 by using RRC signaling, and activate one or a plurality of TCI-states among the set TCI-states based on MAC CE. The MAC CE may be referred to as a TCI-state Indication for UE-specific PDCCH MAC CE. UE may monitor CORESET based on an active TCI-state corresponding to the

### CORESET.

UE may assume that an antenna port of a PDCCH demodulation reference signal (DMRS) in CORESET#0 (search space associated with CORESET#0) and the detected SSB have a QCL relation. Note that it may be referred to as QCL assumption for UE to assume that a given CORESET, channel, or reference signal has a specific QCL (e.g., QCL type D) relation with another CORESET, channel, or reference signal.

The QCL assumption in CORESET#0 may be modified in accordance with a random access procedure. For example, UE may assume that SSB or CSI-RS corresponding to a physical random access channel (PRACH) to which the SSB or the CSI-RS is transmitted has a specific QCL relation (e.g., QCL type D) with DMRS of PDCCH of CORESET#0. A signal that is QCL with DMRS of PDCCH may be referred to as a QCL source of PDCCH.

Correspondence relation between PRACH preamble and resources for contention free random access (CFRA) and one or more SSBs or CSI-RSs may be set by the higher layer signaling for UE.

UE may measure SSB or CSI-RS, and transmit PRACH by using the PRACH resources corresponding to specific SSB or CSI-RS based on the measurement result. UE may determine the specific SSB or CSI-RS as a QCL source for CORESET#0 after CFRA.

UE may determine SSB selected (or determined) during contention based random access (CBRA) as the QCL source for CORESET#0 after CBRA.

### (BFR)

In NR, communication using beam forming has been studied. In order to inhibit the occurrence of radio link failure (RLF), it has been studied that, when the quality of a specific beam is deteriorated, a procedure to switch to another beam (which may be referred to as beam recovery (BR), beam failure recovery (BFR), Layer 1/Layer 2 (L1/L2) beam recovery, or the like) is performed. The BFR procedure may be simply referred to as BFR.

Note that the beam failure in the present disclosure may be referred to as link failure.

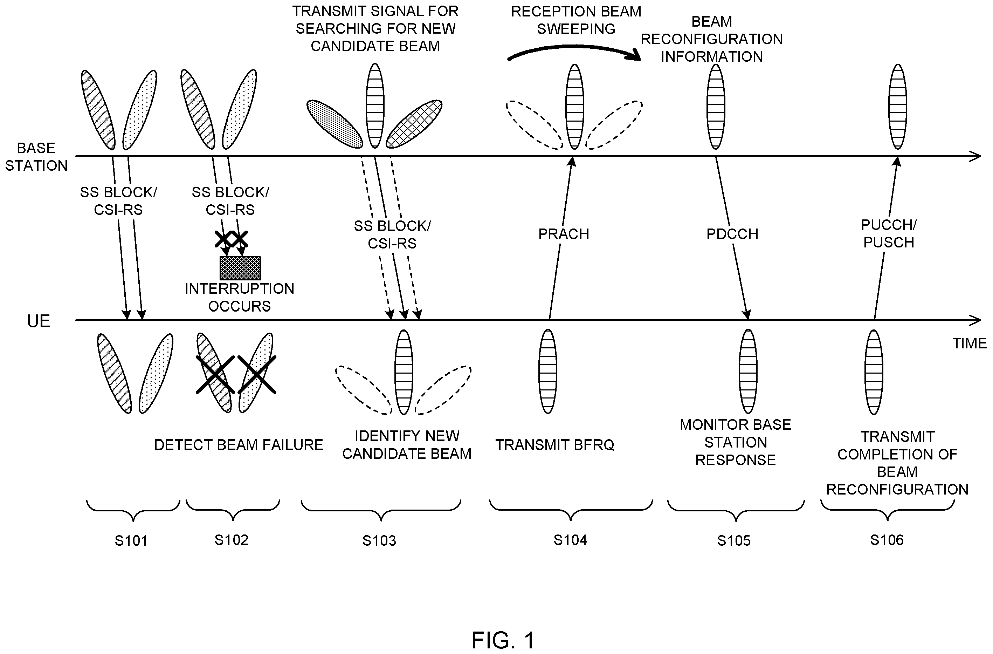

Fig. 1 illustrates one example of a beam recovery procedure in Rel-15 NR. The number of beams or the like are one example, and these are not limitations.

In an initial state (Step S101) in Fig. 1, UE performs measurement based on RS resources transmitted by using two beams. The RS may be at least one of SSB and CSI-RS. RS measured in Step S101 may be referred to as, for example, a beam failure detection RS (BFD-RS). The beam failure detection may be simply referred to as failure detection.

In Step S102, radio waves from a base station are interrupted, so that UE cannot detect BFD-RS (or reception quality of RS is deteriorated). Such interruption can occur due to, for example, influences of obstacles between UE and the base station, fading, and interference.

UE detects beam failure when a given condition is satisfied. For example, if block error rates (BLERs) are less than a threshold value for all set BFD-RSs, UE may detect the occurrence of a beam failure. When the occurrence of a beam failure is detected, a lower layer (physical (PHY) layer) of UE may report (indicate) a beam failure instance to a higher layer (MAC layer).

A criterion is not limited to BLER, and may be reference signal received power in a physical layer (layer 1 reference signal received power (L1-RSRP)). RSRP of the present disclosure may be replaced with information regarding reference signal received quality (RSRQ), a signal to interference plus noise ratio (SINR), or another piece of power or quality.

The beam failure detection may be performed based on, for example, PDCCH instead of or in addition to RS measurement. BFD-RS may be expected to be QCL with DMRS of PDCCH monitored by UE.

Information regarding BFD-RS (e.g., RS index, resources, number, number of ports, and precoding), information regarding beam failure detection (BFD) (e.g., above-mentioned threshold value), and the like may be set by (reported to) UE by using, for example, the higher layer signaling. Information regarding BFD-RS may be replaced with, for example, information regarding resources for the BFD and information regarding BFD-RS resources.

A MAC layer of UE may start given timer (which may be referred to as beam failure detection timer) when receiving a beam failure instance notification from a PHY layer of UE. The MAC layer of UE may trigger BFR (e.g., start one of random access procedures described later) when receiving the beam failure instance notifications a certain number of times or more (e.g., "beamFailureInstanceMaxCount" set by RRC) before the timer expires.

The base station may determine that UE has detected a beam failure when there is no notification from UE or when a given signal (beam recovery request in Step S104) is received from UE.

In Step S103, for beam recovery, UE starts a search for a new candidate beam to be newly used for communication. UE may select a new candidate beam corresponding to the RS by measuring a given RS. RS measured in Step S103 may be referred to as, for example, a new candidate beam identification RS (NCBI-RS), CBI-RS, and a candidate beam RS (CB-RS). NCBI-RS may be the same as or different from BFD-RS. The new candidate beam may be simply referred to as a candidate beam.

UE may determine a beam corresponding to RS that satisfies a given condition as a new candidate beam. UE may determine the new candidate beam based on, for example, RS whose L1-RSRP exceeds a threshold value among set NCBI-RSs. A criterion is not limited to L1-RSRP. L1-RSRP regarding SSB may be referred to as SS-RSRP. L1-RSRP regarding CSI-RS may be referred to as CSI-RSRP.

Information regarding NCBI-RS (e.g., RS resources, number, number of ports, and precoding), information regarding new candidate beam identification (NCBI) (e.g., above-mentioned threshold value), and the like may be set by (reported to) UE by using, for example, the higher layer signaling. Information regarding NCBI-RS may be acquired based on information regarding BFD-RS. Information regarding NCBI-RS may be referred to as, for example, information regarding NBCI resources.

For example, BFD-RS and NCBI-RS may be replaced with a radio link monitoring RS (RLM-RS).

In Step S104, UE that has determined a new candidate beam transmits a beam failure recovery request (BFRQ). The beam recovery request may be referred to as, for example, a beam recovery request signal and a beam failure recovery request signal.

BFRQ may be transmitted by using, for example, at least one of PUCCH, PRACH, PUSCH, and configured grant PUSCH. UE may transmit a preamble (also referred to as RA preamble, PRACH, and the like) as BFRQ by using PRACH resources.

Information regarding the correspondence relation between the detected DL-RS (beam) and the PRACH resources (RA preamble) may be set by UE by using, for example, the higher layer signaling (e.g., RRC signaling).

BFRQ may include information on a new candidate beam determined in Step S103. Resources for BFRQ may be associated with the new candidate beam. Beam information may be reported by using, for example, a beam index (BI), a port index of a given reference signal, and a resource index (e.g., CSI-RS resource indicator (CRI) and SSB resource indicator (SSBRI)).

In Step S105, a base station that has detected BFRQ transmits a response signal (which may be referred to as a gNB response or the like) from UE to BFRQ. The response signal may include reconfiguration information (e.g., DL-RS resource configuration information) on one or a plurality of beams. UE may determine at least one of a transmission beam and a reception beam to be used based on the beam reconfiguration information.

The response signal may be transmitted in, for example, UE common search space of PDCCH. The response signal may be reported by using DCI (PDCCH) having a cyclic redundancy check (CRC) scrambled by an identifier (e.g., a cell-radio RNTI (C-RNTI)) of UE. UE may determine that contention resolution has succeeded when receiving PDCCH corresponding to C-RNTI related to UE itself.

UE may monitor the response signal based on at least one of CORESET for BFR and a search space set for BFR.

For the processing in Step S105, a period for UE to monitor a response from the base station (e.g., the gNB) to BFRQ may be set. The period may be referred to as, for example, a gNB response window, a gNB window, and a beam recovery request response window. UE may retransmit BFRQ if no gNB response is detected within the window period.

In Step S106, UE may transmit a message indicating that beam reconfiguration has been completed to the base station. The message may be transmitted by PUCCH or PUSCH, for example.

Beam recovery success (BR success) may represent a case where Step S106 has been reached, for example. In contrast, beam recovery failure (BR failure) may correspond to, for example, a case where BFRQ has been transmitted a given number of times, or a case where a beam-failure-recovery-timer has expired.

Note that the numbers of these steps are merely attached for explanation. A plurality of steps may be combined or may be changed in order. UE may set whether or not to perform BFR by using higher layer signaling.

As described above, it has been studied to change beams (QCL assumption) of CORESET#0 in accordance with PRACH transmitted in the random access procedure. It has also been studied to explicitly set a beam of CORESET#0 by using the higher layer signaling (e.g., RRC signaling and MAC CE).

It has been studied to use CORESET#0 not only for initial access but for unicast PDCCH after RRC connection. In order to arrange unicast PDCCH in CORESET#0, however, it is necessary to perform the BFR procedure for PDCCH of CORESET#0.

In NR, it has been studied that the base station sets up to two resources for the BFD per BWP for UE by using the higher layer signaling. For example, UE may be provided with resources related to the purpose of a beam failure in resource setting information for failure detection (e.g., "failureDetectionResourcesToAddModList" and "failureDetectionResources" of higher layer parameter).

UE may be provided with a set of indices corresponding to resources for BFD by the higher layer parameter. The set may be, for example, a set of indices (e.g., non-zero power CSI-RS resource IDs) of periodic CSI-RS resource settings. The set may be referred to as, for example, a set q₀ bar (here, q₀ bar is a notation in which an overline is attached to "q₀") and an index set. Hereinafter, the set is simply referred to as a "set q₀".

UE may perform L1-RSRP measurement and the like by using RS resources corresponding to an index included in the set q₀ to detect beam failure.

Note that, in the present disclosure, providing the above-mentioned higher layer parameter indicating information on an index corresponding to resources for the BFD may be replaced with, for example, setting the resources for the BFD and setting BFD-RS.

In contrast, in the current NR, it has been studied that, when no resources for the BFD are set, UE determines to cause the set q₀ to include an index of periodic CSI-RS resource settings. The index has the same value as an RS index in an RS set indicated in accordance with the TCI-state of CORESET used for monitoring PDCCH.

UE expects the set q₀ to include up to two RS indices. Note that, it has been studied that, when one TCI-state includes two RS indices, the set q₀ includes the RS index corresponding to the settings of the QCL type D for the corresponding TCI-state.

In NR, more than two (e.g., three) CORESETs per BWP can be set for UE. One or more TCI-states indicating the QCL relation between a DMRS port of PDCCH and given DL-RS (e.g., CSI-RS and SSB) may be set per CORESET, and are not required to be set.

When more than two CORESETs are set for UE and no higher layer parameter indicating information on an index corresponding to the resources for the BFD is provided, UE needs to determine up to two indices to be included in the set q₀ from more than two RS indices corresponding to these CORESETs.

It has, however, not sufficiently been studied how an index to be included in the set q₀ is selected in such a case. For example, a case where the TCI-state is set in CORESET#0 and a case where the TCI-state is not set in CORESET#0 can be considered. How to handle CORESET#0 has not sufficiently been studied. If these points are not clearly specified, beam failure cannot be properly detected, and communication throughput may be deteriorated.

The present inventors have conceived a method of determining a reference signal index for appropriately detecting a beam failure.

Hereinafter, embodiments according to the present disclosure will be described in detail with reference to the drawings. The radio communication method according to each embodiment may be applied individually or in combination.

In the following description, "CORESET in which no TCI-state is set" may be replaced with CORESET#0, or may be replaced with CORESET other than CORESET#0. "CORESET in which no TCI-state is set" may be replaced with CORESET in which a TCI-state is set but the TCI-state is not indicated or activated.

### (Radio Communication Method)

### <First Embodiment>

In a first embodiment, when no resources for the BFD are set, UE may determine to cause a set q₀ to include RS indices for CORESET used for monitoring PDCCH. Each of the RS indices is determined based on two CORESETs selected (hereinafter, also referred to as determined) by at least one of Embodiments 1-1 and 1-2 below.

In Embodiment 1-1, UE determines two CORESETs in ascending order of monitoring cycles of related (corresponding) search space sets among CORESETs in which a TCI-state is set. Note that, when the monitoring cycles of the search space sets associated with each of the two CORESETs are the same, UE may select CORESET having larger CORESET ID, or may select both.

In Embodiment 1-2, UE determines two CORESETs in ascending order of monitoring cycles of related (corresponding) search space sets among CORESETs regardless of whether or not a TCI-state is set. Note that, when the monitoring cycles of the search space sets associated with each of the two CORESETs are the same, UE may select CORESET having larger CORESET ID, or may select both.

If CORESET in which the TCI-state is set is selected, UE may cause the set q₀ to include an RS index provided by an active TCI-state of CORESET, for example.

If CORESET in which no TCI-state is set is selected, UE may cause the set q₀ to include an RS index provided by QCL assumption of CORESET, for example.

According to the above-described first embodiment, a method of determining CORESET for BFD in a case where no resources for the BFD are set is made to have a high affinity with a method of determining CORESET for RLM in a case where no RLM-RS is set. In this case, since the same method of handling a broken link can be used for RLM and BFR, link recovery using the same CORESET can be made redundant. Note that quick link recovery can be expected since BFD completes processing at layer 1/layer 2 (L1/L2) compared to RLM.

### <Second Embodiment>

In a second embodiment, when no resources for the BFD are set, UE may determine to cause a set q₀ to include RS indices for CORESET used for monitoring PDCCH. Each of the RS indices is provided by an active TCI-states of two CORESETs selected by at least one of Embodiments 2-1 and 2-2 below.

In Embodiment 2-1, UE determines two CORESETs in ascending order of CORESET IDs among CORESETs in which a TCI-state is set.

In Embodiment 2-2, UE determines two CORESETs in ascending order of CORESET IDs among CORESETs regardless of whether or not the TCI-state is set.

If CORESET in which the TCI-state is set is selected, UE may cause the set q₀ to include an RS index provided by an active TCI-state of CORESET, for example.

If CORESET in which no TCI-state is set is selected, UE may cause the set q₀ to include an RS index provided by QCL assumption of CORESET, for example.

According to the above-described second embodiment, a method of determining CORESET for BFD in a case where no resources for the BFD are set is made different from a method of determining CORESET for RLM in a case where no RLM-RS is set. In this case, BFR can cover a broken link that is not covered by RLM.

### <Variations>

In Embodiment 1-1, first, the fact that a TCI-state is set has been indicated. Secondly, the smallness of a monitoring cycle has been indicated. Thirdly, CORESET selection that prioritizes the size of CORESET ID has been indicated. In Embodiment 1-2, first, the smallness of a monitoring cycle has been indicated. Secondly, CORESET selection that prioritizes the size of CORESET ID has been indicated.

In Embodiment 2-1, first, the fact that a TCI-state is set has been indicated. Secondly, CORESET selection that prioritizes the smallness of CORESET ID has been indicated. In Embodiment 2-2, CORESET selection that prioritizes the smallness of CORESET ID has been indicated.

Alternatively, UE may select CORESET used for monitoring PDCCH in a case where no resources for the BFD are set based on any or a combination of factors as described below:
- TCI-state is set/not set in CORESET;
- Size/smallness of CORESET ID;
- Size/smallness of monitoring cycle of search space set related to CORESET;
- Size (length)/smallness (shortness) of CSI-RS cycle for BFD detection; and
- Which search space set is search space set related to CORESET (e.g., common search space set or UE-specific search space set).

These factors may have any priority order.

Prioritizing the smallness of CORESET ID allows BFD of CORESET#0, which is considered to be most important, to be preferably performed.

Prioritizing the size of the monitoring cycle allows a failure of a long-period PDCCH, in which the occurrence of a failure is less likely to be noticed, to be preferably detected. In contrast, prioritizing the smallness of the monitoring cycle allows a failure of PDCCH for low delay to be preferably detected.

Prioritizing the size of the CSI-RS cycle allows BFD of PDCCH, which is considered to have relatively poor quality, to be preferably performed. In contrast, prioritizing the smallness of the CSI-RS cycle allows more accurate (highly reliable) BFD to be preferably performed.

Prioritizing CORESET corresponding to a common search space set allows BFD of PDCCH, which is generally considered to be more important, to be performed. In contrast, prioritizing CORESET corresponding to a UE-specific search space set allows BFD of PDCCH, which is important for scheduling PDSCH, PUSCH, and the like including TCI-state indication MAC CE to be performed.

Note that, in each embodiment of the present disclosure, an RS index included in the set q₀ may be limited to an index corresponding to an active TCI-state of CORESET, or may be determined from an index corresponding to all TCI-states (or assumed QCL-state) set in CORESET.

Although two indices included in the set q₀ have been described, the "two" may be replaced with a given number larger than two.

### (Radio Communication System)

The configuration of a radio communication system according to one embodiment of the present disclosure will be described below. In the radio communication system, communication is performed by using one or a combination of the radio communication methods according to each embodiment of the present disclosure.

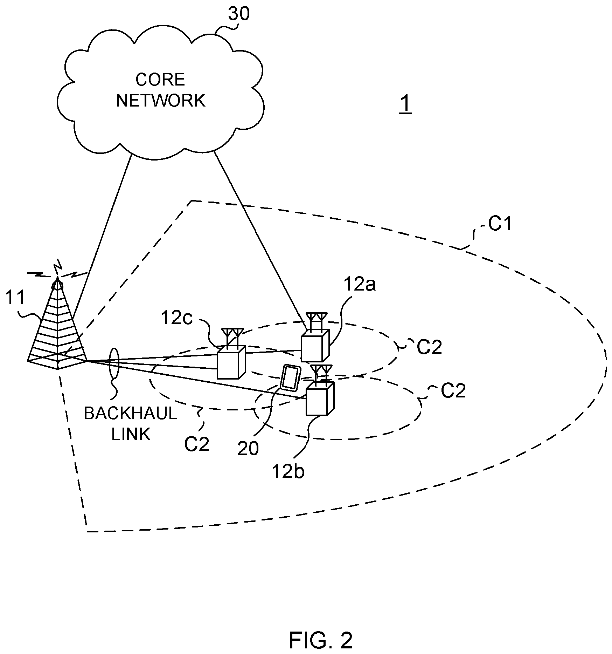

Fig. 2 illustrates one example of a schematic configuration of a radio communication system according to one embodiment. A radio communication system 1 may be a system that implements communication by using, for example, long term evolution (LTE) and 5th generation mobile communication system new radio (5G NR) specified by third generation partnership project (3GPP).

The radio communication system 1 may support dual connectivity (multi-RAT dual connectivity (MR-DC)) between a plurality of pieces of radio access technology (RAT). MR-DC may include dual connectivity between LTE (evolved universal terrestrial radio access (E-UTRA)) and NR (E-UTRA-NR dual connectivity (EN-DC)) and dual connectivity between NR and LTE (NR-E-UTRA dual connectivity (NE-DC)).

In EN-DC, an LTE (E-UTRA) base station (eNB) is a master node (MN), and an NR base station (gNB) is a secondary node (SN). In NE-DC, an NR base station (gNB) is MN, and an LTE (E-UTRA) base station (eNB) is SN.

The radio communication system 1 may support dual connectivity between a plurality of base stations in identical RAT (e.g., dual connectivity in which both MN and SN are NR base stations (gNBs) (NR-NR dual connectivity (NN-DC)).

The radio communication system 1 may include a base station 11 and base stations 12 (12a to 12c). The base station 11 forms a macro cell C1 with a relatively wide coverage. The base stations 12 (12a to 12c) are disposed within the macro cell C1, and form a small cell C2 narrower than the macro cell C1. User terminal 20 may be positioned in at least one cell. The arrangement, number, and the like of each cell and the user terminal 20 are not limited to the aspect illustrated in the figure. Hereinafter, the base stations 11 and 12 will be collectively referred to as "base stations 10", unless these stations are distinguished from each other.

The user terminal 20 may be connected to at least one of the plurality of base stations 10. The user terminal 20 may use at least one of carrier aggregation using a plurality of component carriers (CCs) and dual connectivity (DC).

Each CC may be included in at least one of a frequency range 1 (FR1) and a frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited to these, and, for example, FR1 may correspond to a frequency range higher than FR2.

The user terminal 20 may perform communication in each CC by using at least one of time division duplex (TDD) and frequency division duplex (FDD).

The plurality of base stations 10 may be connected by wire (e.g., optical fiber or X2 interface in compliance with common public radio interface (CPRI)) or by radio (e.g., NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include at least one of, for example, an evolved packet core (EPC), a 5G core network (5GCN), and a next generation core (NGC).

The user terminal 20 may support at least one of communication methods such as LTE, LTE-A, and 5G.

In the radio communication system 1, a radio access method based on orthogonal frequency division multiplexing (OFDM) may be used. For example, cyclic prefix OFDM (CP-OFDM), discrete Fourier transform spread OFDM (DFT-s-OFDM), orthogonal frequency division multiple access (OFDMA), single carrier frequency division multiple access (SC-FDMA) may be used in at least one of downlink (DL) and uplink (UL).

The radio access method may be referred to as a waveform. Note that, in the radio communication system 1, another radio access method (e.g., another single carrier transmission method and another multi-carrier transmission method) may be used as UL and DL radio access methods.

In the radio communication system 1, for example, a physical downlink shared channel (PDSCH) shared by each piece of the user terminal 20, a physical broadcast channel (PBCH), and a physical downlink control channel (PDCCH) may be used as a downlink channel.

In the radio communication system 1, for example, a physical uplink shared channel (PUSCH) shared by each piece of the user terminal 20, a physical uplink control channel (PUCCH), and a physical random access channel (PRACH) may be used as an uplink channel.

For example, user data, higher layer control information, and a system information block (SIB) are transmitted by PDSCH. PUSCH may transmit the user data, the higher layer control information, and the like. PBCH may transmit a master information block (MIB).

PDCCH may transmit lower layer control information. The lower layer control information may include, for example, downlink control information (DCI) including scheduling information of at least one of PDSCH and PUSCH.

Note that DCI that schedules PDSCH may be referred to as, for example, DL assignment and DL DCI, and DCI that schedules PUSCH may be referred to as, for example, UL grant and UL DCI. Note that PDSCH may be replaced with DL data, and PUSCH may be replaced with UL data.

A control resource set (CORESET) and search space may be used to detect PDCCH. CORESET corresponds to resources for searching for DCI. The search space corresponds to a search region and a search method for PDCCH candidates. One CORESET may be associated with one or a plurality of pieces of search space. UE may monitor CORESET associated with certain search space based on search space settings.

One SS may correspond to a PDCCH candidate corresponding to one or a plurality of aggregation levels. One or a plurality of pieces of search space may be referred to as a search space set. Note that, for example, "search space", "search space set", "search space settings", "search space set settings", "CORESET", and "CORESET settings" in the present disclosure may be replaced with each other.

PUCCH may transmit channel state information (CSI), delivery confirmation information (e.g., hybrid automatic repeat request acknowledgement (HARQ-ACK), which may be referred to as ACK/NACK or the like), and scheduling request (SR). PRACH may transmit a random access preamble for establishing connection with a cell.

Note that, in the present disclosure, downlink, uplink, and the like may be expressed without "link". Various channels may be expressed without adding "physical" at the beginning thereof.

In the radio communication system 1, for example, a synchronization signal (SS) and a downlink reference signal (DL-RS) may be transmitted. In the radio communication systems 1, for example, a cell-specific reference signal (CRS), a channel state information reference signal (CSI-RS), a demodulation reference signal (DMRS), a positioning reference signal (PRS), and a phase tracking reference signal (PTRS) may be transmitted as DL-RS.

The synchronization signal may be at least one of, for example, a primary synchronization signal (PSS) and a secondary synchronization signal (SSS). A signal block including SS (PSS or SSS) and PBCH (and DMRS for PBCH) may be referred to as, for example, an SS/PBCH block and an SS Block (SSB). Note that SS, SSB, and the like may also be referred to as a reference signal.

In the radio communication system 1, for example, a sounding reference signal (SRS) and a demodulation reference signal (DMRS) may be transmitted as an uplink reference signal (UL-RS). Note that, DMRS may be referred to as a user equipment-specific reference signal (UE-specific reference signal)."

### (Base Station)

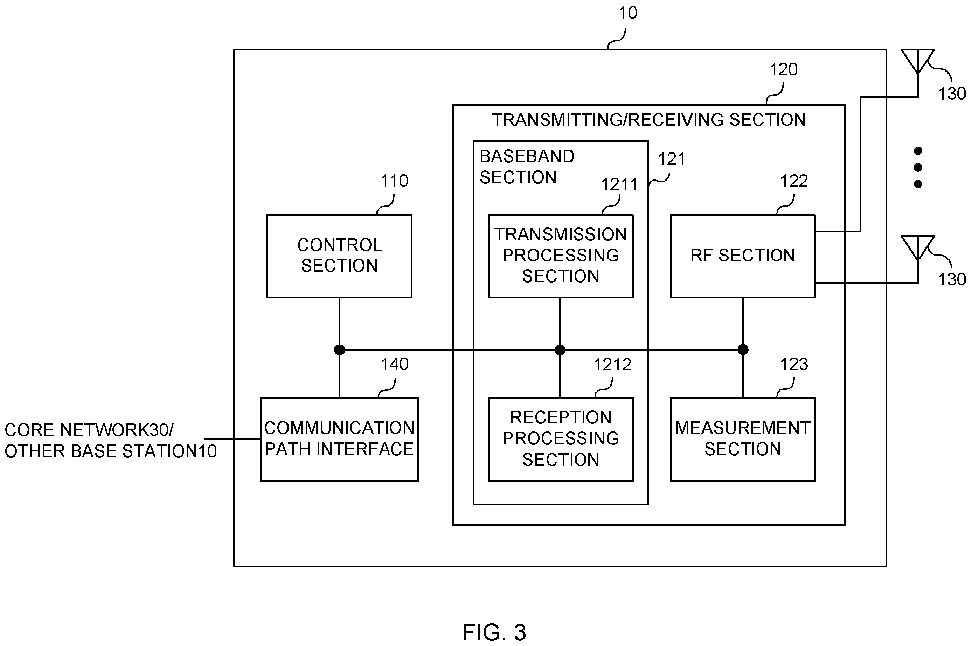

Fig. 3 illustrates one example of the configuration of a base station according to one embodiment. The base station 10 includes a control section 110, a transmitting/receiving section 120, a transmission/reception antenna 130, and a communication path interface 140. Note that one or more of the control sections 110, one or more of the transmitting/receiving sections 120, one or more of the transmission/reception antennas 130, and one or more of the communication path interfaces 140 may be provided.

Note that the example mainly illustrates a functional block of a characteristic part of the present embodiment. The base station 10 may be assumed to have another functional block necessary for radio communication as well. A part of processing of each unit described below may be omitted.

The control section 110 controls the entire base station 10. The control section 110 can include a controller and a control circuit, which is described based on common recognition in the technical field according to the present disclosure.

The control section 110 may control, for example, signal generation and scheduling (e.g., resource allocation or mapping). The control section 110 may control, for example, transmission/reception and measurement using the transmitting/receiving section 120, the transmission/reception antenna 130, and the communication path interface 140. The control section 110 may generate, for example, data to be transmitted as a signal, control information, and a sequence, and transfer the data, the control information, and the sequence to the transmitting/receiving section 120. The control section 110 may perform, for example, call processing (e.g., settings and releasing) of a communication channel, management of the state of the base station 10, and management of radio resources.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, and a transmission/reception circuit, which are described based on common recognition in the technical field according to the present disclosure.

The transmitting/receiving section 120 may be configured as an integrated transmitting/receiving section, or may be configured by a transmitting section and a receiving section. The transmitting section may include the transmission processing section 1211 and the RF section 122. The receiving section may include the reception processing section 1212, the RF section 122, and the measurement section 123.

The transmission/reception antenna 130 can include an antenna described based on common recognition in the technical field according to the present disclosure, for example, an array antenna.

The transmitting/receiving section 120 may transmit, for example, the above-described downlink channel, synchronization signal, and downlink reference signal. The transmitting/receiving section 120 may receive, for example, the above-described uplink channel and uplink reference signal.

The transmitting/receiving section 120 may form at least one of a transmission beam and a reception beam by using, for example, digital beam forming (e.g., precoding) and analog beam forming (e.g., phase rotation).

The transmitting/receiving section 120 (transmission processing section 1211) may perform packet data convergence protocol (PDCP) layer processing, radio link control (RLC) layer processing (e.g., RLC retransmission control), and medium access control (MAC) layer processing (e.g., HARQ retransmission control), and the like on, for example, data and control information acquired from the control section 110 to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog transform on the bit string to be transmitted, and may output a baseband signal.

The transmitting/receiving section 120 (RF section 122) may perform, for example, modulation to a radio frequency range, filtering processing, and amplification on a baseband signal, and transmit a signal in the radio frequency range via the transmission/reception antenna 130.

In contrast, the transmitting/receiving section 120 (RF section 122) may perform, for example, amplification, filtering processing, and demodulation to a baseband signal on a signal in the radio frequency range received by the transmission/reception antenna 130.

The transmitting/receiving section 120 (reception processing section 1212) may apply, on an acquired baseband signal, reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, and PDCP layer processing, and acquire user data.

The transmitting/receiving section 120 (measurement section 123) may perform measurement on the received signal. For example, the measurement section 123 may perform, for example, radio resource management (RRM) measurement and channel state information (CSI) measurement based on the received signal. The measurement unit 123 may measure, for example, received power (e.g., reference signal received power (RSRP)), received quality (e.g., reference signal received quality (RSRQ), signal to interference plus noise ratio (SINR), signal to noise ratio (SNR)), signal strength (e.g., received signal strength indicator (RSSI)), and propagation path information (e.g., CSI), and the like. The measurement result may be output to the control section 110.

The communication path interface 140 may transmit/receive a signal (perform backhaul signaling) to and from an apparatus included in the core network 30, other base stations 10, and the like, and may, for example, acquire and transmit user data (user plane data), control plane data, and the like for the user terminal 20.

Note that the transmitting section and the receiving section of the base station 10 in the present disclosure may include at least one of the transmitting/receiving section 120, the transmission/reception antenna 130, and the communication path interface 140.

Note that the transmitting/receiving section 120 may transmit a reference signal (RS) for beam failure detection (BFD) to the user terminal 20.

### (User terminal)

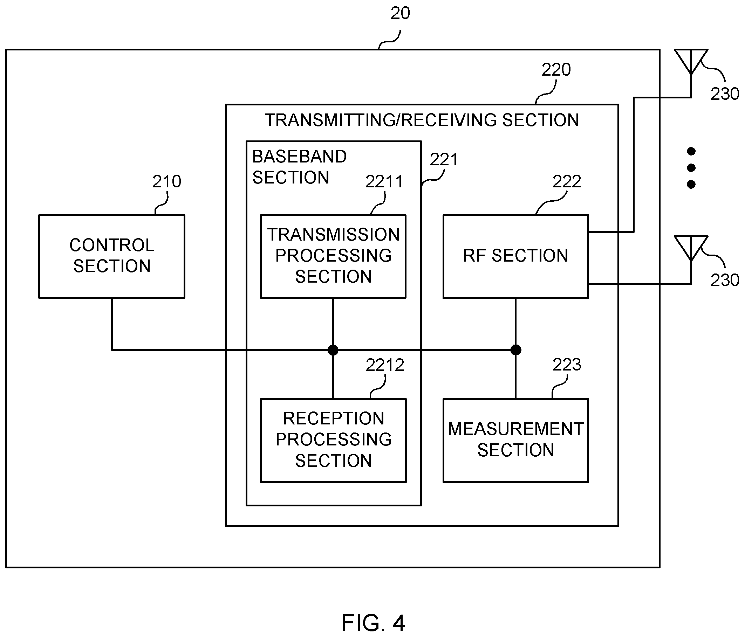

Fig. 4 illustrates one example of the configuration of user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be provided.

Note that the example mainly illustrates a functional block of a characteristic part of the present embodiment. The user terminal 20 may be assumed to have another functional block necessary for radio communication as well. A part of processing of each unit described below may be omitted.

The control section 210 controls the entire user terminal 20. The control section 210 can include a controller and a control circuit, which is described based on common recognition in the technical field according to the present disclosure.

The control section 210 may control, for example, signal generation and mapping. The control section 210 may control, for example, transmission/reception using the transmitting/receiving section 220 and the transmission/reception antenna 230 and measurement. The control section 210 may generate, for example, data to be transmitted as a signal, control information, and a sequence, and transfer the data, the control information, and the sequence to the transmission/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, and a transmission/reception circuit, which are described based on common recognition in the technical field according to the present disclosure.

The transmitting/receiving section 220 may be configured by an integrated transmitting/receiving section, or may be configured by a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna described based on common recognition in the technical field according to the present disclosure, for example, an array antenna.

The transmitting/receiving section 220 may receive, for example, the above-described downlink channel, synchronization signal, and downlink reference signal. The transmitting/receiving section 220 may transmit, for example, the above-described uplink channel and uplink reference signal.

The transmitting/receiving section 220 may form at least one of a transmission beam and a reception beam by using, for example, digital beam forming (e.g., precoding) and analog beam forming (e.g., phase rotation).

The transmitting/receiving section 220 (transmission processing section 2211) may perform PDCP layer processing, RLC layer processing (e.g., RLC retransmission control), MAC layer processing (e.g., HARQ retransmission control), and the like on, for example, data acquired from the control section 210 and control information to generate a bit string to be transmitted.

The transmitting/receiving section 220 (transmission processing section 2211) may perform, on a bit string to be transmitted, transmission processing such as channel encoding (which may include error correction encoding), modulation, mapping, filtering processing, DFT processing (if necessary), IFFT processing, precoding, and digital-analog transform, and output a baseband signal.

Note that whether or not to apply DFT processing may be determined based on settings of transform precoding. When transform precoding is enabled for a certain channel (e.g., PUSCH), the transmitting/receiving section 220 (transmission processing section 2211) may perform DFT processing as the above-described transmission processing in order to transmit the channel by using a DFT-s-OFDM waveform. When this is not the case, the transmitting/receiving section 220 (transmission processing section 2211) is not required to perform DFT processing as the above-described transmission processing.

The transmitting/receiving section 220 (RF section 222) may perform, for example, modulation to a radio frequency range, filtering processing, and amplification on a baseband signal, and transmit a signal in the radio frequency range via the transmission/reception antenna 230.

In contrast, the transmitting/receiving section 220 (RF section 222) may perform, for example, amplification, filtering processing, and demodulation to a baseband signal on the signal in the radio frequency range received by the transmission/reception antenna 230.

The transmitting/receiving section 220 (reception processing section 2212) may apply, on an acquired baseband signal, reception processing such as analog-digital transform, FFT processing, IDFT processing (if necessary), filtering processing, demapping, demodulation, decoding (which may include error correction decoding), MAC layer processing, RLC layer processing, and PDCP layer processing, and acquire, for example, user data.

The transmitting/receiving section 220 (measurement section 223) may perform measurement on the received signal. For example, the measurement section 223 may perform, for example, RRM measurement and CSI measurement based on the received signal. The measurement section 223 may measure, for example, received power (e.g., RSRP), received quality (e.g., RSRQ, SINR, and SNR), signal strength (e.g., RSSI), and propagation path information (e.g., CSI). The measurement result may be output to the control section 210.

Note that the transmitting section and the receiving section of the user terminal 20 in the present disclosure may include at least one of the transmitting/receiving section 220, the transmission/reception antenna 230, and the communication path interface 240.

Note that the transmitting/receiving section 220 may receive a reference signal (RS) for beam failure detection (BFD) .

When a set of RS indices corresponding to the above-described resources for the BFD is not set by higher layer signaling (e.g., resource setting information for failure detection (e.g., "failureDetectionResourcesToAddModList" and "failureDetectionResources" of higher layer parameter)), the control section 210 may select (determine) CORESETs of up to a given number (e.g., two) for determining an RS index to be included in the set in consideration of whether or not a TCI-state is set in CORESET.

The control section 210 is not required to select CORESET (e.g., CORESET#0), for which no TCI-state is set, as the CORESETs of up to the given number.

The control section 210 may select CORESETs of up to the given number by prioritizing, first, the fact that a TCI-state is set, secondly, the smallness of a monitoring cycle, and thirdly, the size of a CORESET identifier (CORESET-ID). For example, when the number of CORESETs for which a TCI-state is set is larger than the above-described given number, the control section 210 may identify CORESET having a smaller monitoring cycle among CORESETs. When the number of the specified CORESET is further larger than the above-described given number, the control section 210 may select CORESET having larger CORESET-ID as CORESET of up to the given number.

The control section 210 may determine to cause CORESET having smaller CORESET-ID to be more preferentially included in the CORESET of up to the given number.

### (Hardware Configuration)

Note that the block diagrams that have been used to describe the above-described embodiments indicate blocks in functional units. These functional blocks (configuration units) is implemented in any combination of at least one of hardware or software. The method of implementing each functional block is not particularly limited. That is, each functional block may be achieved by one apparatus physically or logically coupled, or may be achieved by directly or indirectly connecting two or more physically or logically separate apparatuses (e.g., using wires, radio, or the like) and using these plurality of apparatuses. The functional block may be achieved by combining the above-described one apparatus or the plurality of apparatuses with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, and assigning. For example, a functional block (configuration unit) that causes transmission to function may be called as, for example, a transmitting unit and a transmitter. In any case, as described above, the implementation method is not particularly limited.

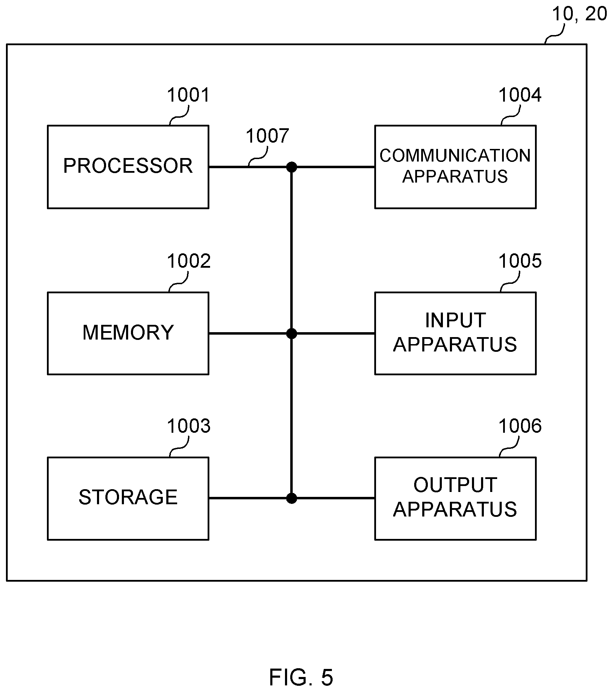

For example, the base station, the user terminal, and the like according to one embodiment of the present disclosure may function as a computer that performs the processing of the radio communication method of the present disclosure. Fig. 5 illustrates one example of the hardware configuration of a base station and a user terminal according to one embodiment. The above-described base station 10 and user terminal 20 may be physically formed as a computer apparatus including a processor 1001, a memory 1002, a storage 1003, a communication apparatus 1004, an input apparatus 1005, an output apparatus 1006, and a bus 1007.

Note that, in the present disclosure, the terms such as an apparatus, a circuit, a device, a section, and a unit can be replaced with each other. The hardware configuration of the base station 10 and the user terminal 20 may be configured to include one or a plurality of apparatuses illustrated in the figures, or may be configured without including some apparatuses.

For example, although only one processor 1001 is illustrated, a plurality of processors may be provided. One processor may execute processing, and two or more processors may execute the processing simultaneously, sequentially, or in another method. Note that the processor 1001 may be mounted with one or more chips.

Each function of the base station 10 and the user terminal 20 is implemented by, for example, controlling communication via the communication apparatus 1004 by causing given software (program) to be read on hardware such as the processor 1001 and the memory 1002 and thereby causing the processor 1001 to perform operation, or by controlling at least one of reading and writing of data in the memory 1002 and the storage 1003.

The processor 1001 controls the entire computer by, for example, operating an operating system. The processor 1001 may include a central processing unit (CPU) including an interface with peripheral equipment, a control apparatus, an operation apparatus, and a register. For example, at least a part of the above-described control section 110 (210), transmission/receiving section 120 (220), and the like may be implemented by the processor 1001.

The processor 1001 reads, for example, programs (program codes), software modules, and data from at least one of the storage 1003 and the communication apparatus 1004 to the memory 1002, and executes various pieces of processing in accordance with the programs (program codes), software modules, and data. A program to cause a computer to execute at least a part of the operations described in the above-described embodiment is used as the program. For example, the control section 110 (210) may be implemented by a control program that is stored in the memory 1002 and operates on the processor 1001. Other functional blocks may be similarly implemented.

The memory 1002 is a computer-readable recording medium, and may include at least one of, for example, a read only memory (ROM), an erasable programmable ROM (EPROM), an electrically EPROM (EEPROM), a random access memory (RAM) and other appropriate storage media. The memory 1002 may be referred to as a register, a cache, a main memory (primary storage apparatus), and the like. The memory 1002 can store a program (program code), a software module, and the like, which can be executed for performing the radio communication method according to one embodiment of the present disclosure.

The storage 1003 is a computer-readable recording medium, and may include at least one of, for example, a flexible disk, a floppy (registered trademark) disk, a magneto-optical disk (e.g., a compact disc ROM (CD-ROM)), a digital versatile disc, a Blu-ray (registered trademark) disk, a removable disk, a hard disk drive, a smart card, a flash memory device (e.g., card, stick, and key drive), a magnetic stripe, a database, a server, and other appropriate storage media. The storage 1003 may be referred to as an auxiliary storage apparatus.

The communication apparatus 1004 is hardware (transmission/reception device) for performing intercomputer communication via at least one of a wired network and a wireless network, and is referred to as, for example, a network device, a network controller, a network card, and communication module. The communication apparatus 1004 may include a high frequency switch, a duplexer, a filter, and a frequency synthesizer in order to achieve at least one of, for example, frequency division duplex (FDD) and time division duplex (TDD). For example, the communication apparatus 1004 may implement the above-described transmitting/receiving section 120 (220), transmission/reception antenna 130 (230), and communication apparatus 1004. The transmitting/receiving section 120 (220) may be mounted in a physically or logically separated manner with the transmitting section 120a (220a) and the receiving section 120b (220b).

The input apparatus 1005 is an input device (e.g., keyboard, mouse, microphone, switch, button, and sensor) for receiving input from the outside. The output apparatus 1006 is an output device (e.g., display, speaker, and light emitting diode (LED) lamp) for performing output to the outside. Note that the input apparatus 1005 and the output apparatus 1006 may be an integrated configuration (e.g., touch panel).

Apparatuses such as the processor 1001 and the memory 1002 are connected by the bus 1007 for communicating information. The bus 1007 may include a single bus, or may include buses different between the apparatuses.

The base station 10 and the user terminal 20 may include hardware such as a microprocessor, a digital signal processor (DSP), an application specific integrated circuit (ASIC), a programmable logic device (PLD), and a field programmable gate array (FPGA), and part or all of each functional block may be implemented by the hardware. For example, the processor 1001 may be mounted with at least one of these pieces of hardware.

### (Variations)

Note that terms described in the present disclosure and terms necessary for understanding the present disclosure may be replaced with other terms that have the same or similar meanings. For example, a channel, a symbol, and a signal (or signaling) may be replaced with each other. The signal may be a message. A reference signal can be abbreviated as an "RS", and may be referred to as a "pilot", a "pilot signal" and the like, depending on a standard to be applied. A component carrier (CC) may be referred to as a cell, a frequency carrier, a carrier frequency, and the like.

The radio frame may include one or a plurality of periods (frames) in a time domain. Each of one or a plurality of periods (frames) constituting the radio frame may be referred to as a subframe. The subframe may include one or a plurality of slots in the time domain. The subframe may be a fixed time length (e.g., 1 ms) that does not depend on numerology.

Here, the numerology may be a communication parameter applied to at least one of transmission and reception of a certain signal or channel. The numerology may indicate at least one of, for example, subcarrier spacing (SCS), a bandwidth, a symbol length, a cyclic prefix length, a transmission time interval (TTI), the number of symbols per TTI, a radio frame configuration, specific filtering processing to be performed by a transceiver in the frequency domain, and specific windowing processing to be performed by the transceiver in the time domain.

The slot may include one or a plurality of symbols (e.g., orthogonal frequency division multiplexing (OFDM) symbols and single carrier frequency division multiple access (SC-FDMA) symbols) in the time domain. The slot may be a time unit based on numerology.

A slot may include a plurality of mini-slots. Each mini-slot may include one or a plurality of symbols in the time domain. The mini-slot may be referred to as a "sub-slot". Each mini-slot may include symbols fewer in number than a slot. PDSCH (or PUSCH) transmitted in a time unit larger than a mini-slot may be referred to as PDSCH (PUSCH) mapping type A. PDSCH (or PUSCH) transmitted by using a mini-slot may be referred to as PDSCH (PUSCH) mapping type B.

All of the radio frame, the subframe, the slot, the mini-slot, and the symbol represents a time unit at the time of transmitting a signal. The radio frame, the subframe, the slot, the mini-slot, and the symbol may be called by other applicable names. Note that time units such as a frame, a subframe, a slot, a mini-slot, and a symbol in the present disclosure may be replaced with each other.

For example, one subframe may be referred to as TTI, a plurality of consecutive subframes may be referred to as TTI, and one slot or one mini-slot may be referred to as TTI. That is, at least one of the subframe and TTI may be a subframe (1 ms) in an existing LTE, may be a period shorter than 1 ms (e.g., 1-13 symbols), and may be a period longer than 1 ms. Note that the unit representing TTI may be referred to as a "slot", a "mini-slot", and the like, instead of a "subframe".

Here, TTI refers to a minimum time unit of scheduling in radio communication, for example. For example, in LTE systems, the base station performs scheduling of allocating radio resources (such as frequency bandwidth and transmission power that can be used in each piece of user terminal) to each user terminal in TTI units. Note that the definition of TTI is not limited to this definition.

TTI may be a unit of time of transmitting a channelencoded data packet (transport block), a code block, a codeword, and the like, or may be a processing unit for scheduling, link adaptation, and the like. Note that, when TTI is given, a time interval (e.g., the number of symbols) in which the transport block, the code block, the codeword, and the like are actually mapped may be shorter than the TTI.

Note that, when one slot or one mini-slot is referred to as TTI, one or more TTIs (i.e., one or more slots or one or more mini-slots) may be the minimum time unit of scheduling. The number of slots (the number of mini-slots) which constitute the minimum time unit of the scheduling may be controlled.

TTI having a time length of 1 ms may be referred to as, for example, usual TTI (TTI in 3GPP Rel. 8 to 12), normal TTI, long TTI, a usual subframe, a normal subframe, a long subframe, and a slot. TTI shorter than the usual TTI may be referred to as, for example, shortened TTI, short TTI, partial TTI (or fractional TTI), a shortened subframe, a short subframe, a mini-slot, a sub-slot, and a slot.

Note that long TTI (e.g., usual TTI and subframe) may be replaced with TTI having a time length exceeding 1 ms, and short TTI (e.g., shortened TTI) may be replaced with TTI having a TTI length less than the TTI length of a long TTI and equal to or more than 1 ms.

A resource block (RB) is a resource allocation unit in the time domain and the frequency domain, and may include one or a plurality of consecutive subcarriers in the frequency domain. The number of subcarriers included in RB may be the same regardless of the numerology, and may be 12, for example. The number of subcarriers included in the RB may be determined based on the numerology.

RB may include one or a plurality of symbols in the time domain, and may be one slot, one mini-slot, one subframe, or one TTI in length. One TTI, one subframe, and the like each may include one or a plurality of resource blocks.

Note that one or a plurality of RBs may be referred to as, for example, physical resource blocks (physical RBs (PRBs)), sub-carrier groups (SCGs), resource element groups (REGs), a PRB pair, and an RB pair.

The resource block may include one or a plurality of resource elements (REs). For example, one RE may be a radio resource region of one subcarrier and one symbol.

A bandwidth part (BWP) (which may be called partial bandwidth and the like) may represent a subset of consecutive common resource blocks (RBs) for certain numerology in a certain carrier. Here, the common RB may be specified by the index of the RB based on a common reference point of the carrier. PRB may be defined in certain BWP and numbered within the BWP.

BWP may include BWP for UL (UL BWP) and BWP for DL (DL BWP). One or a plurality of BWPs may be set within one carrier for UE.

At least one of the set BWPs may be active, and UE is not required to assume to transmit or receive a given signal/channel outside the active BWP. Note that "cell", "carrier", and the like in the present disclosure may be replaced with "BWP".

Note that the configurations of the above-described radio frame, subframe, slot, mini-slot, and symbol are merely examples. For example, configurations such as the number of subframes included in a radio frame, the number of slots per subframe or radio frame, the number of mini-slots included in a slot, the number of symbols and RBs included in a slot or a mini-slot, the number of subcarriers included in RB, and the number of symbols, the symbol length, the cyclic prefix (CP) length in TTI can be variously changed.

Information, parameters, and the like described in the present disclosure may be represented by using an absolute value, may be represented by using a relative value from a given value, or may be represented by using another piece of corresponding information. For example, radio resources may be indicated by a given index.

The names used for parameters and the like in the present disclosure are in no respect limitative. Mathematical expressions and the like using these parameters may differ from those explicitly disclosed in the present disclosure. Since various channels (e.g., physical uplink control channel (PUCCH) and physical downlink control channel (PDCCH)) and information elements can be identified by all suitable names, the various names assigned to these various channels and information elements are in no respect limitative.

The information, signals, and the like described in the present disclosure may be represented by using any of various different pieces of technology. For example, data, instructions, commands, information, signals, bits, symbols, and chips, which may be referred to throughout the above description, may be represented by voltages, currents, electromagnetic waves, magnetic fields or magnetic particles, optical fields or photons, or any combination thereof.

Information, signals, and the like can be output at least one of from a higher layer to a lower layer and from a lower layer to a higher layer. Information, signals, and the like may be input/output via a plurality of network nodes.

The input/output information, signals, and the like may be stored in a specific location (e.g., memory), or may be managed by using a control table. The information, signals, and the like to be input/output can be overwritten, updated, or appended. The input/output information, signals, and the like may be deleted. The input/output information, signals, and the like may be transmitted to another apparatus.

Information may be reported not in the aspects/embodiments described in the present disclosure but by another method. For example, in the present disclosure, information may be reported by physical layer signaling (e.g., downlink control information (DCI) and uplink control information (UCI)), higher layer signaling (e.g., radio resource control (RRC) signaling, broadcast information (master information block (MIB), system information block (SIB), and the like), and medium access control (MAC) signaling), another signal, or a combination thereof.

Note that the physical layer signaling may be referred to as, for example, layer 1/layer 2 (L1/L2) control information (L1/L2 control signal) and L1 control information (L1 control signal). The RRC signaling may be referred to as an RRC message, and may be, for example, an RRC connection setup message, an RRC connection reconfiguration message, and the like. The MAC signaling may be reported by using, for example, a MAC control element (MAC CE).

Given information may be reported (e.g., "being X" may be reported) not explicitly but implicitly (e.g., by no reporting the given information or reporting another piece of information).

Judging may be performed by a value represented in one bit (0 or 1), may be performed in a Boolean value represented by true or false, or may be performed by comparing numerical values (e.g., comparison against a given value).

Regardless of whether referred to as software, firmware, middleware, microcode, or hardware description language, or referred to by other names, software should be broadly interpreted to mean, for example, an instruction, an instruction set, a code, a code segment, a program code, a program, a subprogram, a software module, an application, a software application, a software package, a routine, a subroutine, an object, an executable file, an execution thread, a procedure, and a function.

Software, an instruction, information, and the like may be transmitted/received via a transmission medium. For example, when software is transmitted from a website, a server, or another remote source by using at least one of wired technology (e.g., coaxial cable, optical fiber cable, twisted-pair cable, and digital subscriber line (DSL)) and radio technology (e.g., infrared radiation and microwaves), at least one of the wired technology and radio technology is included in the definition of the transmission medium.

The terms "system" and "network" used in the present disclosure may be interchangeably used. The "network" may mean an apparatus (e.g., base station) included in the network.

In the present disclosure, terms such as "precoding", "precoder", "weight (precoding weight)", "quasi-co-location (QCL)", "transmission configuration indication state (TCI-state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be interchangeably used. The base station may be referred to by a term such as a macro cell, a small cell, a femto cell, and a pico cell.

The base station can accommodate one or a plurality of (e.g., three) cells. When the base station accommodates a plurality of cells, the entire coverage area of the base station can be partitioned into a plurality of smaller areas, and each smaller area can provide communication service by a base station subsystem (e.g., indoor small base station (remote radio head (RRH))). A term "cell" or "sector" refers to all or part of the coverage area of at least one of a base station and a base station subsystem that provide communication service within the coverage.

In the present disclosure, terms such as "mobile station (MS)", "user terminal", "user equipment (UE)", and "terminal" may be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, and a client, or by some other suitable terms.

At least one of the base station or the mobile station may be referred to as, for example, a transmission apparatus, a reception apparatus, and a radio communication apparatus. Note that at least one of the base station and the mobile station may be, for example, a device mounted on a moving object and a moving object itself. The moving object may be a vehicle (e.g., car and airplane), an unmanned moving object (e.g., drone and autonomous car), or a (manned or unmanned) robot. Note that at least one of the base station or the mobile station also includes an apparatus that does not necessarily move during communication operation. For example, at least one of the base station and the mobile station may be internet of things (IoT) device such as a sensor.

The base station in the present disclosure may be replaced with user terminal. For example, each aspect/embodiment of the present disclosure may be applied to a configuration in which communication between a base station and user terminal is replaced with communication between a plurality of pieces of user terminal (e.g., which may be referred to as device-to-device (D2D), vehicle-to-everything (V2X), and the like). In this case, the user terminal 20 may have the function of the base station 10 described above. The wording such as "up" and "down" may be replaced with the wording corresponding to communication between terminals (e.g., "side"). For example, an uplink channel and a downlink channel may be replaced with a side channel.

Similarly, the user terminal in the present disclosure may be replaced with a base station. In this case, the base station 10 may have the function of the user terminal 20 described above.

The operation that has been performed by a base station in the present disclosure may be performed by an upper node thereof in some cases. In a network including one or a plurality of network nodes with a base station, it is clear that various operations that are performed for communication with a terminal can be performed by a base station, one or more network nodes (e.g., mobility management entity (MME) and serving-gateway (S-GW) may be possible, but are not limitations) other than a base station, or a combination thereof.

Each aspect/embodiment illustrated in the present disclosure may be used individually or in a combination, and may be switched along with execution. The order of processing procedures, sequences, flowcharts, and the like of each aspect/embodiment described in the present disclosure may be changed as long as there is no inconsistence. For example, regarding the method described in the present disclosure, various step elements are presented by using an illustrative order, but the presented specific order is not a limitation.

Each aspect/embodiment illustrated in the present disclosure may be applied to, for example, long term evolution (LTE), LTE-Advanced (LTE-A), LTE-Beyond (LTE-B), SUPER 3G, IMT-Advanced, 4th generation mobile communication system (4G), 5th generation mobile communication system (5G), future radio access (FRA), new radio access technology (New-RAT), new radio (NR), new radio access (NX), future generation radio access (FX), global system for mobile communications (GSM) (registered trademark), CDMA 2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), systems using another appropriate radio communication method, and next generation systems expanded based on these systems. A plurality of systems may be combined (e.g., combination of LTE or LTE-A and 5G) and applied.

The description "based on" used in the present disclosure does not mean "based only on", unless otherwise specified. In other words, the description "based on" means both "based only on" and "based at least on."

Any reference to elements with designations such as "first", "second", and the like used in the present disclosure does not generally limit an amount or order of these elements. These designations may be used in the present disclosure as a convenient method of distinguishing two or more elements. Reference to the first and second elements does not mean that only two elements may be employed, or that the first element must precede the second element in some way.

The term "judging (determining)" used in the present disclosure may encompass a wide variety of operations. For example, "judging (determining)" may be regarded as "judging (determining)" judging, calculating, computing, processing, deriving, investigating, looking up, search, inquiry (e.g., looking up in a table, database, or another data structure), ascertaining, and the like.

"Judging (determining)" may be regarded as "judging (determining)" receiving (e.g., receiving information), transmitting (e.g., transmitting information), input, output, accessing (e.g., accessing data in a memory), and the like.

"Judging (determining)" may be regarded as "judging (determining)" resolving, selecting, choosing, establishing, comparing, and the like. That is, "judging (determining)" may be regarded to "judging (determining)" some operations.

"Judging (determining)" may be replaced with "assuming", "expecting", "considering", and the like.

The terms "connected" and "coupled" used in the present disclosure, or all variations of these terms mean all direct or indirect connections or couplings between two or more elements, and can include the presence of one or more intermediate elements between two elements that are "connected" or "coupled" to each other. Elements may be coupled or connected physically, logically, or in a combination of physical and logical manners. For example, "connection" may be replaced with "access".

In the present disclosure, when two elements are connected, these elements can be considered to be "connected" or "coupled" to each other by using one or more electrical wires, cables, printed electrical connections, and the like, and, in some non-limiting and non-inclusive examples, by using, for example, electromagnetic energy having wavelengths in the radio frequency domain, microwave regions, and (both visible and invisible) optical regions.

In the present disclosure, the phrase "A and B are different" may mean "A and B are different from each other". Note that the phrase may mean that "each of A and B is different from C". The terms such as "detached" and "coupled" may be interpreted similarly to "different".

When the terms such as "include" and "including" and variations thereof are used in the present disclosure, these terms are intended to be inclusive similarly to the term "comprising". The term "or" used in the present disclosure is intended not to be an exclusive-OR.

In the present disclosure, for example, when an article such as "a", "an", and "the" in English is added in translation, the present disclosure may include the fact that a noun following these articles may be nouns of plural forms.

Although the invention according to the present disclosure has been described in detail above, it is obvious to a person skilled in the art that the invention according to the present disclosure is not limited to the embodiments described in the present disclosure. The invention according to the present disclosure can be implemented as a correction and a modification without departing from the scope of the invention defined by the recitations of claims. Consequently, the present disclosure is described for the purpose of exemplification and explanation, and has no limitative meaning to the invention according to the present disclosure.

## Claims

1. A terminal (20) comprising:
a receiving section (220) configured to receive a reference signal, RS, for beam failure detection, BFD; and
a control section (210) configured to, when more than a given number of control resource sets, CORESETs, having active transmission configuration indication, TCI, states are set and a set of RS indices corresponding to a resource for the BFD is not set by higher layer signaling, determine an RS index to be included in the set based on an active TCI state of up to the given number of CORESETs out of the more than the given number of CORESETs that are set,
wherein the control section (210) is configured to determine up to the given number of CORESETs, according to an ascending order for monitoring periodicity of a search space set, from the more than the given number of CORESETs that are set, and
for CORESETs in which the monitoring periodicity is the same, the control section (210) is configured to determine up to the given number of CORESETs according to a descending order of CORESET ID.

2. The terminal (20) according to claim 1,
wherein the control section (210) is configured to not select CORESETs, for which a TCI-state is not set, as up to the given number of CORESETs.

3. A radio communication method of a terminal (20), comprising the steps of:
receiving a reference signal, RS, for beam failure detection, BFD;
when more than a given number of control resource sets, CORESETs, having active transmission configuration indication, TCI, states are set and a set of RS indices corresponding to a resource for the BFD is not set by higher layer signaling, determining an RS index to be included in the set based on an active TCI state of up to the given number of CORESETs out of the more than the given number of CORESETs that are set;
determining up to the given number of CORESETs, according to an ascending order for monitoring periodicity of a search space set, from the more than the given number of CORESETs that are set; and
for CORESETs in which the monitoring periodicity is the same, determining up to the given number of CORESETs according to a descending order of CORESET ID.

4. A system comprising a terminal (20) and a base station (10), wherein:
the base station (10) comprises:
a transmitting section (120) configured to transmit a reference signal, RS, for beam failure detection, BFD, and
the terminal (20) comprises:
a receiving section (220) configured to receive the RS; and
a control section (210) configured to, when more than a given number of control resource sets, CORESETs, having active transmission configuration indication, TCI, states are set and a set of RS indices corresponding to a resource for the BFD is not set by higher layer signaling, determine an RS index to be included in the set based on an active TCI state of up to the given number of CORESETs out of the more than the given number of CORESETs that are set,
wherein the control section (210) is configured to determine up to the given number of CORESETs, according to an ascending order for monitoring periodicity of a search space set, from the more than the given number of CORESETs that are set, and
for CORESETs in which the monitoring periodicity is the same, the control section (210) is configured to determine up to the given number of CORESETs according to a descending order of CORESET ID.

## Patentansprüche

1. Endgerät (20), umfassend:
einen Empfangsabschnitt (220), der so konfiguriert ist, dass er ein Referenzsignal, RS, für Strahlausfallerkennung, BFD, empfängt; und
einen Steuerabschnitt (210), der so konfiguriert ist, dass er, wenn mehr als eine gegebene Anzahl von Steuerungsressourcensätzen, CORESETs, die einen Zustand aktiver Übertragungskonfigurationsanzeige, TCI, aufweisen, eingestellt ist und ein Satz von RS-Indizes, der einer Ressource für die BFD entspricht, nicht durch Signalisierung auf höherer Schicht eingestellt ist, einen RS-Index bestimmt, der in den Satz eingeschlossen werden soll, basierend auf dem aktiven TCI-Zustand von bis zu der gegebenen Anzahl von CORESETs unter den mehr als der gegebenen Anzahl von CORESETs, die eingestellt sind,
wobei der Steuerabschnitt (210) so konfiguriert ist, dass er bis zu der gegebenen Anzahl von CORESETs gemäß einer aufsteigenden Reihenfolge für Überwachungsperiodizität eines Suchraumsatzes unter den mehr als der gegebenen Anzahl von CORESETs, die eingestellt sind, bestimmt und
für CORESETs, in denen die Überwachungsperiodizität die gleiche ist, der Steuerabschnitt (210) so konfiguriert ist, dass er bis zu der gegebenen Anzahl von CORESETs gemäß einer absteigenden Reihenfolge von CORESET-ID bestimmt.

2. Endgerät (20) nach Anspruch 1,
wobei der Steuerabschnitt (210) so konfiguriert ist, dass er keine CORESETs auswählt, für die ein TCI-Zustand nicht eingestellt ist, als bis zu der gegebenen Anzahl von CORESETs.

3. Funkkommunikationsverfahren für ein Endgerät (20),
umfassend folgende Schritte:
Empfangen eines Referenzsignals, RS, für Strahlausfallerkennung, BFD;
wenn mehr als eine gegebene Anzahl von Steuerungsressourcensätzen, CORESETs, die einen Zustand aktiver Übertragungskonfigurationsanzeige, TCI, aufweisen, eingestellt ist und ein Satz von RS-Indizes, die einer Ressource für die BFD entsprechen, nicht durch Signalisierung auf höherer Schicht eingestellt ist, Bestimmen eines RS-Indexes, der in den Satz eingeschlossen werden soll, basierend auf einem aktiven TCI-Zustand von bis zu der gegebenen Anzahl von CORESETs unter den mehr als der gegebenen Anzahl von CORESETs, die eingestellt sind;
Bestimmen bis zu der gegebenen Anzahl von CORESETs gemäß einer aufsteigenden Reihenfolge für Überwachungsperiodizität eines Suchraumsatzes unter den mehr als der gegebenen Anzahl von CORESETs, die eingestellt sind; und
für CORESETs, in denen die Überwachungsperiodizität die gleiche ist, Bestimmen von bis zu der gegebenen Anzahl von CORESETs gemäß einer absteigenden Reihenfolge von CORESET-ID.

4. System, das ein Endgerät (20) und eine Basisstation (10) umfasst, wobei:
wobei die Basisstation (10) Folgendes umfasst:
einen Übertragungsabschnitt (120), der so konfiguriert ist, dass er ein Referenzsignal, RS, für Strahlausfallerkennung, BFD, überträgt und
das Endgerät (20), das Folgendes umfasst:
einen Empfangsabschnitt (220), der so konfiguriert ist, dass er das RS empfängt; und
einen Steuerabschnitt (210), der so konfiguriert ist, dass er, wenn mehr als eine gegebene Anzahl von Steuerungsressourcensätzen, CORESETs, die einen Zustand aktiver Übertragungskonfigurationsanzeige, TCI, aufweisen, eingestellt ist und ein Satz von RS-Indizes, der einer Ressource für die BFD entspricht, nicht durch Signalisierung auf höherer Schicht eingestellt ist, einen RS-Index bestimmt, der in den Satz eingeschlossen werden soll, basierend auf dem aktiven TCI-Zustand von bis zu der gegebenen Anzahl von CORESETs unter den mehr als der gegebenen Anzahl von CORESETs, die eingestellt sind,
wobei die Steuerabschnitt (210) so konfiguriert ist, dass sie bis zu der gegebenen Anzahl von CORESETs gemäß einer aufsteigenden Reihenfolge für Überwachungsperiodizität eines Suchraumsatzes unter den mehr als der gegebenen Anzahl von CORESETs, die eingestellt sind, bestimmt und
für CORESETs, in denen die Überwachungsperiodizität die gleiche ist, der Steuerabschnitt (210) so konfiguriert ist, dass er bis zu der gegebenen Anzahl von CORESETs gemäß einer absteigenden Reihenfolge von CORESET-ID 3 bestimmt.

## Revendications

1. Terminal (20) comprenant :
une section de réception (220) configurée pour recevoir un signal de référence, RS, pour une détection de défaillance de faisceau, BFD ; et
une section de commande (210) configurée pour, lorsque plus qu'un nombre donné d'ensembles de ressources de commande, CORESET, présentant des états d'indication de configuration de transmission, TCI, actifs sont définis et qu'un ensemble d'indices de RS correspondant à une ressource pour la BFD n'est pas défini par une signalisation de couche supérieure, déterminer un indice de RS à inclure dans l'ensemble sur la base d'un état de TCI actif d'un nombre allant jusqu'au nombre donné de CORESET parmi les plus que le nombre donné de CORESET qui sont définis,
dans lequel la section de commande (210) est configurée pour déterminer un nombre allant jusqu'au nombre donné de CORESET, selon un ordre croissant pour une périodicité de surveillance d'un ensemble d'espaces de recherche, parmi les plus que le nombre donné de CORESET qui sont définis, et
pour des CORESET dans lesquels la périodicité de surveillance est la même, la section de commande (210) est configurée pour déterminer un nombre allant jusqu'au nombre donné de CORESET selon un ordre décroissant d'ID de CORESET.

2. Terminal (20) selon la revendication 1,
dans lequel la section de commande (210) est configurée pour ne pas sélectionner des CORESET, pour lesquels un état de TCI n'est pas défini, comme faisant partie du nombre allant jusqu'au nombre donné de CORESET.

3. Procédé de communication radio d'un terminal (20), comprenant les étapes suivantes :
la réception d'un signal de référence, RS, pour une détection de défaillance de faisceau, BFD ;
lorsque plus qu'un nombre donné d'ensembles de ressources de commande, CORESET, présentant des états d'indication de configuration de transmission, TCI, actifs sont définis et qu'un ensemble d'indices de RS correspondant à une ressource pour la BFD n'est pas défini par une signalisation de couche supérieure, la détermination d'un indice de RS à inclure dans l'ensemble sur la base d'un état de TCI actif d'un nombre allant jusqu'au nombre donné de CORESET parmi les plus que le nombre donné de CORESET qui sont définis ;
la détermination d'un nombre allant jusqu'au nombre donné de CORESET, selon un ordre croissant pour une périodicité de surveillance d'un ensemble d'espaces de recherche, parmi les plus que le nombre donné de CORESET qui sont définis ; et
pour des CORESET dans lesquels la périodicité de surveillance est la même, la détermination d'un nombre allant jusqu'au nombre donné de CORESET selon un ordre décroissant d'ID de CORESET.

4. Système comprenant un terminal (20) et une station de base (10), dans lequel :
la station de base (10) comprend :
une section d'émission (120) configurée pour émettre un signal de référence, RS, pour une détection de défaillance de faisceau, BFD, et
le terminal (20) comprend :
une section de réception (220) configurée pour recevoir le RS ; et
une section de commande (210) configurée pour, lorsque plus qu'un nombre donné d'ensembles de ressources de commande, CORESET, présentant des états d'indication de configuration de transmission, TCI, actifs sont définis et qu'un ensemble d'indices de RS correspondant à une ressource pour la BFD n'est pas défini par une signalisation de couche supérieure, déterminer un indice de RS à inclure dans l'ensemble sur la base d'un état de TCI actif d'un nombre allant jusqu'au nombre donné de CORESET parmi les plus que le nombre donné de CORESET qui sont définis,
dans lequel la section de commande (210) est configurée pour déterminer un nombre allant jusqu'au nombre donné de CORESET, selon un ordre croissant pour une périodicité de surveillance d'un ensemble d'espaces de recherche, parmi les plus que le nombre donné de CORESET qui sont définis, et
pour des CORESET dans lesquels la périodicité de surveillance est la même, la section de commande (210) est configurée pour déterminer un nombre allant jusqu'au nombre donné de CORESET selon un ordre décroissant d'ID de CORESET.
